# EUROPÄISCHE PATENTSCHRIFT

(11) **EP 2 488 468 B1**
(45) Veröffentlichungstag und Bekanntmachung des Hinweises auf die Patenterteilung: **27.05.2015**
(21) Anmeldenummer: 10775729.6
(22) Anmeldetag: 07.10.2010
(51) Int. Cl.: C04B 35/468, H01C 7/02

(54) **WIDERSTANDSBAUELEMENT UMFASSEND EIN KERAMIKMATERIAL**
RESISTOR COMPONENT COMPRISING A CERAMIC MATERIAL
RESISTANCE COMPRENANT UN MATÉRIAU CÉRAMIQUE

(30) Priorität: 14.10.2009 DE 102009049404
(43) Veröffentlichungstag der Anmeldung: 22.08.2012
(73) Patentinhaber: Epcos AG, 81669 München (DE)
(72) Erfinder: STEINBERGER, Bernhard, A-8054 Graz (AT); KAHR, Werner, A-8530 Deutschlandsberg (AT); IHLE, Jan, A-8071 Grambach (AT)
(74) Vertreter: Epping - Hermann - Fischer
(86) Internationale Anmeldenummer: PCT/EP2010/065005
(87) Internationale Veröffentlichungsnummer: WO 2011/045227

(56) Entgegenhaltungen:
- EP-A1- 2 377 837
- WO-A2-98/54737
- DING S W ET AL: "Electrical properties of Y- and Mn-doped BaTiO3-based PTC ceramics", CERAMICS INTERNATIONAL, ELSEVIER, AMSTERDAM, NL, Bd. 34, Nr. 8, 1. Dezember 2008 (2008-12-01), Seiten 2007-2010, XP025479771, ISSN: 0272-8842, DOI: DOI:10.1016/J.CERAMINT.2007.07.023 [gefunden am 2008-10-01]

## Beschreibung

Widerstandsbauelement umfassend ein Keramikmaterial.

Es wird ein Widerstandsbauelement umfassend ein Keramikmaterial nach dem Anspruch 1 angegeben.

Ein weit verbreitetes Problem von Keramikmaterialien, welche beispielsweise Anwendung in PTC-Bauelementen finden, ist der Verlauf der Widerstands-Temperatur-Kennlinie, unter Einhaltung geforderter Materialkennwerte. PTC-Bauelemente sind temperaturabhängige Widerstandsbauelemente (Thermistoren) mit positiven Temperaturkoeffizient (PTC = positive temperature coefficient). Ihr Widerstand steigt mit zunehmender Temperatur.

Für beispielsweise Heizeranwendungen, wie zum Beispiel dielektrische Zusatzheizungen von Kraftfahrzeugen, ist eine hohe Leistungsaufnahme bei möglichst tiefen Betriebstemperaturen der einzelnen Bauteile, sowie sehr gute Regeleigenschaften dieser Heizelemente gefordert. Gleichzeitig müssen die Durchbruchspannungen (U_{D}) und der Nennwiderstand (R_{R}) den Anforderungen entsprechen. Die Durchbruchspannung (U_{D}) ist die höchste Spannung, die das Bauelement aushalten kann. Bei einer Spannung über diesem Wert verliert das Bauelement seine funktionelle Eigenschaft und kann gegebenenfalls zerstört werden. Der Nennwiderstand (R_{R}) ist in der Widerstandswert des unbelasteten Bauelements bei einer bestimmten Nenntemperatur (T_{R}). Die allgemeine übliche Nenntemperatur beträgt 25 °C.

Für Motorstartanwendungen, wie zum Beispiel in Kühlschrankkompressoren, ist zur Verbesserung der Energieeffizienz die Reduktion der Restleistung im Arbeitspunkt unter Beibehaltung ausreichender Einschaltzeiten und Einschaltströme gefordert. Gleichzeitig müssen jedoch die hohe Durchbruchspannung (U_{D}) und die geringe Abkühlzeiten des Bauelements für eine sichere Funktion erhalten bleiben. Damit kann unter anderem eine wesentliche Energieeinsparung erzielt werden.

Für Anwendung beispielsweise im Überlastschutzbereich ist eine möglichst hohes Regelverhältnis zwischen Nennstrom und Reststrom bei Arbeitspunkten mit möglichst tiefen Betriebstemperaturen gefordert. Damit lässt sich eine wesentlich höhere Sicherheit im Überlastfall erzielen.

Bei beispielsweise Sensoranwendungen zur Ermittlung von Temperaturen mit PTC-Bauelementen ist ein relativ breites Temperaturfenster für die Signaltemperatur aufgrund der Kennlinienform spezifiziert, was die Anwendung von PTC-Temperaturen einschränkt. Ein steilerer Anstieg zwischen der Minimaltemperatur (T_{MIN}) bis zur Maximaltemperatur (T_{MAX}) würde eine Verkleinerung des Temperaturfensters ermöglichen, und somit eine präzisere Einstellung der Schalttemperatur. Die Minimaltemperatur (T_{MIN}), ist hierbei die Temperatur, bei welcher der Minimalwiderstand (R_{MIN}) erreicht wird. Analog hierzu ist die Maximaltemperatur (T_{MAX}) die Temperatur, bei der im Messbereich der höchste Widerstand, also der Maximalwiderstand (R_{MAX}), gemessen wird.

Die Druckschriften WO 98/54737 A2 und Ding, S. W. et al.: "Electrical Properties of Y- and Mn-Doped BaTiO3-Based PTC Ceramics", Ceramics International, 34 (2008), Seiten 2007-2010 offenbaren jeweils Keramikzusammensetzungen auf der Basis von dotiertem BaTiO₃.

Eine Aufgabe von Ausführungsformen der Erfindung besteht darin, ein Keramikmaterial bereitzustellen, welches eine verbesserte Widerstands-Temperatur-Kennlinie aufweist.

Insbesondere sollte der Kennlinienverlauf zwischen der Minimaltemperatur (T_{MIN}) und der Bezugstemperatur (T_{REF}) eine möglichst geringe Temperaturdifferenz (ΔT) aufweisen. Nach der Bezugstemperatur (T_{REF}) sollte der Kennlinienverlauf einen starken Anstieg des Widerstandes aufweisen. Die Durchbruchspannung (U_{D}) des Bauelements sollte sich hierbei nicht verschlechtern.

Die Bezugstemperatur (T_{REF}) ist die zugehörige Temperatur zu dem Bezugswiderstand (R_{REF}). Die Bezugstemperatur (T_{REF}) ist definiert als die Temperatur des Bezugswiderstandes (R_{REF}) für den gilt: R_{REF} = 2 x R_{MIN}, wobei R_{MIN} für den Minimalwiderstand steht.

In bisherigen Ansätzen wurde die Aufgabe dadurch gelöst, dass dem Keramikmaterial Flüssigphasenbildner, wie beispielsweise Si, Ge, B, K, oder Li zugesetzt wurden.

Die Aufgabe wird erfindungsgemäß durch ein Widerstandsbauelement umfassend ein Keramikmaterial nach dem Anspruch 1 gelöst. Weitere Ausführungsformen des Keramikmaterials sowie ein Verfahren zur Herstellung des Keramikmaterials und ein Widerstandsbauelement, welches das Keramikmaterial umfasst, sind offenbart.

In der Erfindung weist das Keramikmaterial die Zusammensetzung nach dem Anspruch 1 auf.

Der Bestandteil A wird als 1 beziehungsweise 100 mol-% in Bezug auf 100 mol-% gesamtes Perowskitmaterial gesetzt. Dadurch, dass das Verhältnis B/A größer 1 ist, hat der Bestandteil B somit einen Anteil von größer 100 mol-%.

Hierbei ist z vorzugsweise größer als 1,002 d.h.: 1,002 < z.

In Zusammenhang mit dieser Erfindung sind unter "Verunreinigungen" Elemente bzw. Verbindungen zu verstehen, welche dem Keramikmaterial nicht aktiv zugesetzt werden, und in diesem nicht erwünscht sind. Diese können beispielsweise als Verunreinigungen der Ausgangsstoffe, oder durch den Herstellungsprozess in das Keramikmaterial eingetragen werden. Erfindungsgemäß liegt die Summe der Verunreinigungen im Keramikmaterial unter 0,05 mol-%, besonders bevorzugt unter 0,01 mol-%.

Die Elemente, für die die Platzhalter D und E stehen, werden in das Kristallgitter, welches durch die Bestandteile A und B ausgebildet wird, eingebaut. Die Elemente liegen jeweils mit dem für ihre Oxidationszahl bzw. durch den Gitter-Strukturtyp bestimmten entsprechendem Anteil an Sauerstoff vor. Die Elemente können somit beispielsweise als Oxide, aber auch als andere Salze in das Gitter eingebracht worden sein. Bei dem Kristall-Gitter kann es sich insbesondere um ein Perowskit-Gitter handeln.

Die Donator-Eigenschaften von D beziehungsweise die Akzeptor-Eigenschaften von E beziehen sich jeweils auf das Vermögen des entsprechenden Elementes Elektronendichte abzugeben beziehungsweise aufzunehmen.

Undotiertes BaTiO₃ ist aufgrund seiner Bandlücke ("band gap") von 3 eV ein Isolator mit einem spezifischen Widerstand von größer 10¹⁰ Ωcm. Durch beispielsweise eine partielle Reduktion des Ti von Ti⁴⁺ zu Ti³⁺ kann eine sogenannte n-Type Leitfähigkeit erreicht werden: Ti⁴⁺ + e⁻ -> Ti³⁺. Die hierbei freigesetzten Elektronen sind nicht lokalisiert. Die Reduktion kann beispielsweise durch das Anlassen in Sauerstoff freier Atmosphäre erfolgen, was zu Sauerstoff-Leerstellen führt, oder durch partielle Substitution von Ba²⁺ oder Ti⁴⁺ durch Ionen höherer Valenz. Eine Dotierung von Ionen mit niedrigerer Valenz würde nicht zu einer p-Typ Leitfähigkeit führen.

Da Valenzzustände größer als 2 für Ba und größer 4 für Ti nicht möglich sind, wird die übergeordnete elektrische Neutralität vor allem durch das entstehen von Sauerstoff-Leerstellen gewährleistet.

Die Indizes d und e sind in Relation zum Anteil A zu sehen, welcher als 1 gesetzt ist.

Durch den Überschussanteil an Ti beziehungsweise den Einbau der Elemente, für die Platzhalter D und E stehen, entsteht eine deutliche Asymmetrie zwischen A-Platz- und B-Platz-Elementen.

Ein PTC-Bauelement, welches ein solches Keramikmaterial umfasst, weist in seinem Kennlinienverlauf eine geringe Temperaturdifferenz ΔT zwischen T_{MIN} und T_{REF} auf. Die Temperaturdifferenz ΔT liegt insbesondere im Bereich von 30 K und 5 K. Der Anstieg α des Widerstandes des PTC-Bauelementes beträgt insbesondere 35 %/K bis 130 %/K im Temperaturbereich zwischen T_{REF} und T_{MAX}. Die Erfinder haben überraschenderweise festgestellt, dass ein solches Bauelement im Gegensatz zu herkömmlichen Bauelementen, welche ebenfalls eine steile Kennlinie aufweisen, eine Durchbruchspannung U_{D} aufweisen, die 130 V/mm weit übersteigt.

Somit können Bauelemente, welche die erfindungsgemäße Keramikmaterial umfassen, für Heizanwendungen eine höhere Leistungsaufnahme bei tieferen Betriebstemperaturen der einzelnen Bauteile, sowie eine sehr gute Regeleigenschaft erzielt werden. Gleichzeitig entspricht die Durchbruchspannung (U_{D}) und der Nennwiderstand (R_{R}) den geforderten Anforderungen.

Für Motorstartanwendungen wird durch die oben genannten Eigenschaften des Keramikmaterials bei dem PTC-Bauelement eine Verbesserung der Energieeffizienz durch die Reduktion der Restleistung im Arbeitspunkt unter Beibehaltung ausreichender Einschaltzeiten und Einschaltströme erreicht. Damit kann beispielsweise eine wesentliche Energieeinsparung erzielt werden.

Für Anwendungen im Überlastschutzbereich können durch Verwendung des erfindungsgemäßen Keramikmaterials Bauteile gefertigt werden, welche ein höheres Regelverhältnis zwischen Nennstrom und Reststrom im Arbeitspunkt bei wesentlich tieferen Betriebstemperaturen erzielen. Damit lässt sich eine wesentlich höhere Sicherheit im Überlastfall gewährleisten.

Bei Sensoranwendungen, beispielsweise zur Ermittlung von Temperaturen, können durch die Verwendung des erfindungsgemäßen Keramikmaterials PTC-Bauelemente gefertigt werden, welche eine verbesserte Kennlinienform durch ein engeres Temperaturfenster aufweisen, wodurch die Signaltemperatur besser spezifiziert wird, was die Anwendbarkeit des Keramikmaterials erweitert.

In einer weiteren Ausführungsform der Erfindung gilt für das molare Verhältnis von B zu A: 1,005 < B/A < 1,05.

Für diese molaren Verhältnisse der Bestandteile B und A konnte ein besonders guter Kennlinienverlauf der Widerstands-Temperatur-Kennlinie erzielt werden.

In der Erfindung steht D für mindestens ein Element ausgewählt aus: Nb, Y, Sb oder ein Element aus der Gruppe der Lanthanoiden und Mischungen daraus. Hierbei ist Y bevorzugt.

D kann somit für nur eines oder auch für Mischungen aus mehreren dieser Elementen stehen. Die hier angeführten Elemente weisen gute Donor-Eigenschaften in Bezug auf die vorliegende Keramik auf.

In einer weiteren Ausführungsform der Erfindung gilt für d: 0 < d.

Das bedeutet, dass D und somit ein Element mit Donor-Eigenschaften im Keramikmaterial vorliegt.

In einer weiteren Ausführungsform der Erfindung gilt für d: 0 < d < 0,01. Dies entspricht einem Zusatz von bis zu 1 mol-% bezogen auf den A-Teil.

In der Erfindung steht E für mindestens ein Element ausgewählt aus: Mn, Fe, Ni, Co, Cu und Mischungen daraus. Hierbei ist Mn bevorzugt.

E kann somit für genau ein Element, aber auch für Mischungen aus den angeführten Elementen stehen. Die hier angeführten Elemente weisen gute Akzeptor-Eigenschaften in Zusammenhang mit der vorliegenden Keramik auf.

In einer weiteren Ausführungsform der Erfindung gilt für e: 0 < e.

Dies bedeutet, dass mindestens ein Element, für das der Platzhalter E steht, im Keramikmaterial vorhanden ist, und somit ein Element, welches Akzeptor-Eigenschaften aufweist.

In einer weiteren Ausführungsform der Erfindung gilt für e: 0 < e < 0,002. Die entspricht einem Zusatz von bis zu 0,2 mol-% bezogen auf den A-Teil.

In einer weiteren Ausführungsform der Erfindung gilt für e und d: 0 < e und 0 < d.

Durch das Zusammenspiel zweier Elemente, von dem eines gute Donor-Eigenschaften und das andere gute Akzeptor-Eigenschaften aufweist, kann ein Keramikmaterial erhalten werden, welches einen guten Kennlinienverlauf für die Widerstands-Temperatur-Kennlinie aufweist, bei der beispielsweise die Temperaturdifferenz ΔT zwischen T_{MIN} und T_{REF} gering ist, und nach der Bezugstemperatur T_{REF} ein steiler Anstieg erfolgt.

In der Erfindung gilt für x: 0<x≤0,6 . Hierbei ist der Bereich 0,12 < x < 0,4 bevorzugt.

Hierbei ist 0,14 ≤ x < 0,4 besonders bevorzugt.

Für diesen Parameterbereich konnten besonders gute Messergebnisse erzielt werden.

Erfindungsgemäß gilt für y: y = 0.

Auch in Abwesenheit von M^{m} konnten für das Keramikmaterial sehr gute Werte erzielt werden. Auch ohne die Substitution von Ti durch M^{m} konnte ein sehr guter Kennlinienverlauf erzielt werden und eine sehr gute Durchbruchspannung U_{D}, sowie eine gute Kennliniensteilheit α.

Erfindungsgemäß steht Mⁿ zumindest teilweise für Ca. Ca hat in A einen Mindestgehalt von 10 mol-%. Hierbei ist ein Mindestgehalt von 12 mol-% bevorzugt, und von 14 mol-% besonders bevorzugt. Die entspricht für den Anteil von Ca an Mⁿ einem x von: x_{Ca} ≥ 0,12 bzw. x_{Ca} ≥ 0,14.

Die Erfinder haben herausgefunden, dass die Substitution von Ba durch Ca zu besonders guten Ergebnissen führt. Die Anwesenheit von Ca in A leistet einen wesentlichen Beitrag, um die Temperaturdifferenz ΔT zwischen T_{MIN} und T_{REF} zu reduzieren, sowie dazu nach T_{REF} einen steilen Anstieg der Widerstands-Temperatur-Kennlinie zu erhalten.

In einer weiteren Ausführungsform der Erfindung umfasst das Keramikmaterial die Elemente B, Ge, Li, K und P höchstens als Verunreinigung.

Bei dem erfindungsgemäßen Keramikmaterial kann in der Regel gänzlich auf die üblichen Flüssigphasenbildner wie beispielsweise die Elemente Si, B, Ge, Li, K und P bzw. deren Oxide verzichtet werden. Diese Elemente liegen höchstens in Form von Verunreinigungen im Keramikmaterial vor. Diese Elemente bzw. deren Oxide werden dem Keramikmaterial im Regelfall nicht aktiv zugesetzt.

Die Vorteile des Widerstandsbauelements ergeben sich analog zu den Vorteilen des entsprechenden Keramikmaterials. Aufgrund der angeführten Eigenschaften des Keramikmaterials eignet sich dieses sehr gut für beispielsweise temperaturabhängige Widerstandsbauelemente.

In einer Variante des Verfahrens umfasst dieses die Verfahrensschritte:
A) Vermengen der Ausgangsstoffe Ba, Mⁿ, Ti, M^{m}, D und E in den entsprechenden stöchiometrischen Verhältnissen, so dass ein Gemisch entsteht,
B) Mahlen des Gemisches aus A), so dass Partikel entstehen,
C) Kalzinieren der Partikel aus B),
D) Nassmahlen der Partikel aus C), so dass ein Schlicker ausgebildet wird,
E) Sprühgranulieren des Schlickers aus D), so dass ein Granulat ausgebildet wird,
F) Pressen des Granulats aus E) in die gewünschte Form, so dass ein Grünkörper ausgebildet wird,
G) Sintern des Grünkörpers aus F), so dass ein Keramikkörper entsteht.

Als Ausgangsstoffe im Verfahrensschritt A) können hierbei beispielsweise Oxide, oxidbildende Verbindungen (d.h. Verbindungen die sich insbesondere unter den Bedingungen des Sinterprozesses zumindest teilweise in Oxide umwandeln) und andere Salze, die als Ausgangsmaterial für die Herstellung des erfindungsgemäßen Keramikmaterials geeignet sind, verwendet werden.

Beim Pressen des Granulats im Verfahrensschritt F) kann beispielsweise eine Trocken-Presstechnik Anwendung finden.

In einer weiteren Variante des Verfahrens umfasst dieses als zusätzlichen Verfahrensschritt H) die Kontaktierung des Keramikkörpers aus G).

Durch die beschriebenen Verfahren kann beispielsweise ein Widerstandsbauelement mit positiven Temperaturkoeffizienten gefertigt werden.

Im Folgenden wird anhand eines Ausführungsbeispiels die Erfindung näher erläutert.

Zur Herstellung eines Widerstandsbauelements mit positiven Temperaturkoeffizienten werden folgende Stoffe eingewogen: BaCO₃ zu 80 mol-%, CaCO₃ zu 15 mol-%, PbO_{1,33} zu 5 mol-%, TiO₂ zu 101 mol-%, YO_{1,5} zu 0,4 mol-%, MnO_{1,5} zu 0,08 mol-% in Bezug auf den A-Teil, welcher 100 mol-% entspricht. Bei diesem Keramikmaterial handelt es sich um ein Perowskitmaterial. Die Ausgangsstoffe werden in Oxidform oder in einer die Oxidform liefernden Form, oder einer die Titanate bildenden Form vorgelegt. Darauf folgt ein Nass- beziehungsweise Trockenmalprozess mit anschließender Kalzination. Nach dem Kalzinieren wird das Material nochmals auf die gewünschte Teilchengröße nassgemahlen und anschließend in die gewünschte Form gepresst.

Dem Schlicker kann ein Binder zugesetzt werden. In diesem Ausführungsbeispiel handelt es sich bei dem Binder um Polyvinylalkohol. Anschließend erfolgt hier eine Sprühtrocknung zur Ausbildung eines pressfähigen Granulates. Mittels Trockenpressung erfolgt dann die Formgebung zum Grünkörper.

In diesem Ausführungsbeispiel wurden die Partikel zu Grünkörper mit einer Abmessung von 34 mm x 7,3 mm x 1,3 mm gepresst. Der so erhaltene Grünkörper wird anschließend in einem Sinterprozess bei einer Maximaltemperatur von 1370 °C gesintert. Hieraus resultiert ein monolithischer Keramikkörper. Anschließend erfolgt die Kontaktierung des Keramikkörpers mit einem unedlen Metall, in diesem Fall mit einer Mehrschichtelektrode aus Cr, Ni und Ag. Das so erhaltene Widerstandsbauelement weist eine Durchbruchspannung von 170 V/mm auf.

Im Folgenden werden Varianten der Erfindung anhand einer Figur und Ausführungsbeispielen näher erläutert.

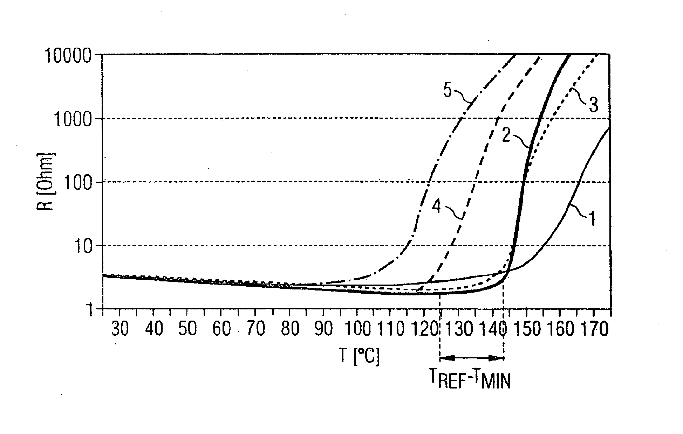

- Figur 1: zeigt die Widerstands-Temperatur-Kennlinien für fünf verschiedene Keramikmaterialien.

Figur 1 zeigt die Widerstands-Temperatur-Kennlinien (1-5) für die jeweiligen Keramikmaterialien 1 bis 5. Es ist jeweils der Widerstand R in Ohm gegen die Temperatur T in Grad Celsius (°C) aufgetragen. Die Zusammensetzung der einzelnen Keramikmaterialien 1 bis 5 ist in der nachfolgenden Tabelle wiedergegeben:

| | BaCO₃ | CaCO₃ | SrCO₃ | PbO_{0,75} | TiO₂ | YO_{1,5} | MnO_{1,5} | SiO₂ | T_{Sint}. [°C] |
|---|---|---|---|---|---|---|---|---|---|
| 1* | 74 | 10,3 | 4,4 | 11,3 | 100, 6 | 0,4 | 0,05 | 2 | 1350 |
| 2 | 80 | 15 | 0 | 5 | 101 | 0,4 | 0,08 | 0 | 1370 |
| 3 | 80 | 15 | 0 | 5 | 101 | 0,4 | 0,08 | 0 | 1360 |
| 4 | 85 | 15 | 0 | 0 | 101 | 0,4 | 0,08 | 0 | 1370 |
| 5 | 80,5 | 15 | 4,5 | 0 | 101 | 0,4 | 0,08 | 0 | 1370 |

| | | | | | | | | | |
|---|---|---|---|---|---|---|---|---|---|
| * nicht erfindungsgemäße Zusammensetzung | | | | | | | | | |

Die Tabelle gibt die jeweilige Elementeinwaage in mol-% der einzelnen Ausgangsstoffe für die jeweilige Zusammensetzung an. Diese entspricht dem Anteil des entsprechenden Metalls in mol-% im Keramikmaterial. Der Anteile der A-Komponente, in diesen Ausführungsbeispielen also die Summe vom BaCO₃, CaCO₃, SrCO₃ und PbO_{0,75}, entspricht 100 mol-%. Die in den folgenden Spalten gelisteten Werte sind relativ hierzu zu lesen. In der letzten Spalte ist die jeweilige Sintertemperatur in °C angegeben.

Es wurden jeweils die Kennlinien für die entsprechenden PTC-Bauelemente bestimmt, bei denen das Keramikmaterial eine Abmessung aufweist von 28,8 mm x 6,2 mm, und einem Elektrodenabstand von 1,1 mm, was der Baüteildicke entspricht. Bei den Keramikmaterialien 2 bis 5 handelt es sich um erfindungsgemäße Keramikmaterialien, wohingegen das Keramikmaterial 1 ein nicht erfindungsgemäßes herkömmliches Keramikmaterial ist. Wie in der Figur 1 zu erkennen ist, weisen die Kennlinien der Keramikmaterialien 2 bis 5 nach dem Temperaturminimum T_{MIN} einen deutlich schnelleren und steileren Anstieg auf, als die Kennlinie für die nicht erfindungsgemäße Keramikmaterial 1. Hierdurch weisen die Keramikmaterialien 2 bis 5 eine deutlich geringere Temperaturdifferenz ΔT zwischen T_{REF} und T_{MIN} auf. Diese Temperaturdifferenz ΔT (T_{REF} - T_{MIN}) ist für die Kennlinie des Keramikmaterials 2 in der Figur 1 eingezeichnet. Die erfindungsgemäßen Keramikmaterialien 2 bis 5 weisen somit jeweils eine Kennlinie auf, welche sowohl ein geringeres ΔT, wie auch eine größere Kennliniensteilheit α aufweist. In beiden Punkten heben sie sich deutlich von der Kennlinie des nicht erfindungsgemäßen Keramikmaterials 1 ab. Die Kennlinien der Keramikmaterialien 2 und 3 weisen jeweils eine Bezugstemperatur T_{REF} von 143 °C auf, die Kennlinie des Keramikmaterials 4 von 122 °C und die Kennlinie des Keramikmaterials 5 von 105 °C.

Die Herstellung der erfindungsgemäßen Keramikmaterialien 2 bis 5 kann beispielsweise entsprechend dem zuvor beschriebenen Ausführungsbeispiel erfolgen.

Die Erfindung ist nicht durch die Beschreibung anhand der Ausführungsbeispiele beschränkt.

### Bezugszeichenliste

- 1: Kennlinie der nicht erfindungsgemäßen Zusammensetzung 1
- 2: Kennlinie der erfindungsgemäßen Zusammensetzung 2
- 3: Kennlinie der erfindungsgemäßen Zusammensetzung 3
- 4: Kennlinie der erfindungsgemäßen Zusammensetzung 4
- 5: Kennlinie der erfindungsgemäßen Zusammensetzung 5

## Patentansprüche

1. Widerstandsbauelement mit positivem Temperaturkoeffizienten umfassend ein Keramikmaterial der folgenden Zusammensetzung:
(Ba₁₋ₓMⁿₓ) O • z(Ti_{1-y}M^{m}_{y})O₂ • D_{d} •Eₑ
mit (Ba₁₋ₓMⁿₓ) = A und (Ti_{1-y}M^{m}_{y}) = B, wobei
- Mⁿ für ein Element steht ausgewählt aus: Mg, Ca, Sr, Pb und Mischungen daraus;
- M^{m} für mindestens ein Element steht ausgewählt aus: Sn, Zr und Mischungen daraus;
- D für mindestens ein Element mit Donator-Eigenschaften steht ausgewählt aus: Nb, Y, Sb oder ein Element aus der Gruppe der Lanthanoiden und Mischungen daraus;
- E für mindestens ein Element mit Akzeptor-Eigenschaften steht ausgewählt aus: Mn, Fe, Ni, Co, Cu und Mischungen daraus;
und für die Parameter gilt: 0 < x ≤ 0,6; 0= y;
0 ≤ d ≤ 0,02; 0 ≤ e ≤ 0,02; und für das molare Verhältnis von B zu A gilt: 1 < B/A, und
wobei das Keramikmaterial höchstens 0,05 mol-% Si umfasst und Mⁿ zumindest teilweise für Ca steht, und Ca einen Mindestgehalt in A von
10 mol-% hat.

2. Widerstandsbauelement nach Anspruch 1,
wobei für das molare Verhältnis von B zu A gilt: 1,005 < B/A < 1,05.

3. Widerstandsbauelement nach einem der vorhergehenden Ansprüche,
wobei für d gilt: 0 < d.

4. Widerstandsbauelement nach einem der vorhergehenden Ansprüche,
wobei für e gilt: 0 < e.

5. Widerstandsbauelement nach einem der vorhergehenden Ansprüche,
wobei für x gilt: 0,12 < x < 0,4.

6. Widerstandsbauelement nach einem der vorhergehenden Ansprüche,
wobei das Keramikmaterial die Elemente B, Ge, Li, K und P höchstens als Verunreinigung umfasst.

## Claims

1. Resistor component having a positive temperature coefficient, comprising a ceramic material having the following composition:
(Ba₁₋ₓMⁿₓ) O•z (Th_{1-y}M^{m}_{y}) O₂•D_{d}•Eₑ
with (Ba₁₋ₓMⁿₓ) = A and (Ti_{1-y}M^{m}_{y}) = B, wherein
- Mⁿ stands for an element selected from: Mg, Ca, Sr, Pb and mixtures thereof;
- M^{m} stands for at least one element selected from: Sn, Zr and mixtures thereof;
- D stands for at least one element having donor properties selected from: Nb, Y, Sb or an element from the lanthanoid group and mixtures thereof;
- E stands for at least one element having acceptor properties selected from: Mn, Fe, Ni, Co, Cu and mixtures thereof;
and the parameters satisfy: 0 < x ≤ 0.6; 0 = y; 0 ≤ d ≤ 0.02; 0 ≤ e ≤ 0.02; and the molar ratio of B to A satisfies: 1 < B/A, and
wherein the ceramic material comprises at most 0.05 mol% of Si and Mⁿ at least partially stands for Ca, and Ca has a minimum content of 10 mol% in A.

2. Resistor component according to Claim 1, wherein the molar ratio of B to A satisfies: 1.005 < B/A < 1.05.

3. Resistor component according to one of the preceding claims, wherein d satisfies: 0 < d.

4. Resistor component according to one of the preceding claims, wherein e satisfies: 0 < e.

5. Resistor component according to one of the preceding claims, wherein x satisfies: 0.12 < x < 0.4.

6. Resistor component according to one of the preceding claims, wherein the ceramic material comprises the elements B, Ge, Li, K and P at most as impurities.

## Revendications

1. Composant résistant présentant un coefficient de température positif, comprenant un matériau céramique qui présente la composition suivante:
(Ba₁₋ₓMⁿₓ) O • z (Ti_{1-y}M^{m}_{y})O₂ • Da Eₑ
avec (Ba₁₋ₓMⁿₓ) = A et (Ti_{1-y}M^{m}_{y}) = B, dans lequel
- Mⁿ représente un élément choisi parmi: Mg, Ca, Sr, Pb, et des mélanges de ceux-ci;
- M^{m} représente au moins un élément choisi parmi: Sn, Zr et des mélanges de ceux-ci;
- D représente au moins un élément avec des propriétés de donneur choisi parmi: Nb, Y, Sb ou un élément du groupe des lanthanides et des mélanges de ceux-ci;
- E représente au moins un élément avec des propriétés d'accepteur choisi parmi: Mn, Fe, Ni, Co, Cu et des mélanges de ceux-ci;
et pour les paramètres on a: 0 < x ≤ 0,6; 0 = y;
0 ≤ d ≤ 0,02: 0 ≤ e ≤ 0,02; et pour le rapport molaire de B à A on a: 1 < B/A, et
dans lequel le matériau céramique comprend au maximum 0,05 % molaires de Si et Mⁿ représente au moins partiellement Ca, et Ca présente une teneur minimale dans A de 10 % molaires.

2. Composant résistant selon la revendication 1, dans lequel on a pour le rapport molaire de B à A: 1,005 < B/A < 1,05.

3. Composant résistant selon l'une quelconque des revendications précédentes, dans lequel on a pour d: 0 < d.

4. Composant résistant selon l'une quelconque des revendications précédentes, dans lequel on a pour e: 0 < e.

5. Composant résistant selon l'une quelconque des revendications précédentes, dans lequel on a pour x: 0,12 < x < 0,4.

6. Composant résistant selon l'une quelconque des revendications précédentes, dans lequel le matériau céramique comprend les éléments B, Ge, Li, K et P au maximum comme impureté.
